# FASCICULE DE BREVET EUROPEEN

(11) **EP 2 031 188 B1**
(45) Date de publication et mention de la délivrance du brevet: **15.09.2010**
(21) Numéro de dépôt: 08161515.5
(22) Date de dépôt: 31.07.2008
(51) Int. Cl.: F01D 9/04, F01D 17/16, F04D 29/56, F16B 19/02

(54) **Etage d'aubes à calage variable pour une turbomachine**
Verstellbare Turbomaschinenstufe
Adjustable turbomachine stage

(30) Priorité: 30.08.2007 FR 0706075
(43) Date de publication de la demande: 04.03.2009
(73) Titulaire: Snecma, 75015 Paris (FR)
(72) Inventeur: Lejars, Claude, 91210, Draveil (FR); Staessen, Richard, 77960, Chailly en Biere (FR)
(74) Mandataire: Ramey, Daniel

(56) Documents cités:
- EP-A- 1 586 744
- EP-A- 1 589 189
- EP-A- 1 628 021
- EP-A- 1 635 039
- FR-A- 2 874 977
- US-A- 4 498 790
- US-A- 4 808 069
- US-A- 4 815 933
- US-A1- 2004 109 762

## Description

La présente invention concerne un étage d'aubes à calage variable pour une turbomachine telle qu'un turboréacteur ou un turbopropulseur d'avion.

Dans une turbomachine, des étages d'aubes à calage variable sont montés entre des roues mobiles de compresseur haute-pression. Ces aubes à calage variable sont portées par le stator et sont réglables en position autour de leurs axes pour optimiser l'écoulement des gaz dans le moteur de la turbomachine (voir par exemple les documents FR-A1-2 874 977 et EP-A1-1 635 039).

Le document EP-A-1 628 021 décrit un système de verrouillage d'au moins deux boulons.

Une aube à calage variable comprend un pivot cylindrique axial à chacune de ses extrémités, ces pivots définissant l'axe de rotation de l'aube. Le pivot radialement externe appelé pivot de commande est engagé dans une cheminée cylindrique d'un carter de la turbomachine et est relié par une biellette à un anneau de commande actionné par un vérin ou un moteur électrique. La rotation de l'anneau de commande est transmise par les biellettes aux pivots externes des aubes et les fait tourner autour de leurs axes.

Le pivot radialement interne appelé pivot de guidage est engagé dans un logement cylindrique d'un anneau interne sectorisé. Chaque secteur d'anneau est maintenu radialement sur des aubes par au moins deux pions cylindriques engagés dans des orifices axiaux du secteur d'anneau, ces pions étant parallèles entre eux et s'étendant de part et d'autre du pivot d'une aube en passant dans une gorge annulaire externe de ce pivot. Les pions cylindriques logés dans les gorges des pivots maintiennent radialement les secteurs d'anneau sur ces pivots.

L'anneau est monté à sa périphérie interne sur une virole annulaire sectorisée comportant des blocs de matière abradable destinés à coopérer avec des léchettes prévues sur le rotor de la turbomachine pour limiter le passage d'air en direction axiale à l'intérieur de l'anneau. La virole comporte une nervure annulaire radialement externe engagée dans une rainure annulaire débouchant vers l'intérieur des secteurs d'anneau pour aligner ces secteurs d'anneau les uns avec les autres. La nervure de la virole est également engagée dans des encoches transversales des pions cylindriques pour maintenir axialement ces pions dans les orifices des secteurs d'anneau.

En fonctionnement, lors de la rotation d'une aube à calage variable autour de son axe, le pivot interne de cette aube vient frotter sur les pions cylindriques situés de part et d'autre de ce pivot, ce qui entraîne des déplacements parasites des pions en rotation autour de leurs axes. Ces déplacements parasites s'ajoutent aux vibrations du moteur et provoquent l'usure de la nervure de la virole par frottement et par appui des fonds des encoches des pions cylindriques sur cette nervure. Lorsque le niveau d'usure de cette nervure a dépassé un certain seuil, il est nécessaire de remplacer la virole annulaire ce qui est une opération longue et coûteuse.

L'invention a notamment pour but d'apporter une solution simple, efficace et économique à ce problème.

Elle propose à cet effet un étage d'aubes à calage variable pour une turbomachine, ces aubes comportant des pivots radialement externes engagés dans des cheminées radiales d'un carter externe et des pivots radialement internes engagés dans des logements correspondants d'un anneau interne sectorisé, chaque secteur d'anneau comportant des orifices axiaux de montage d'au moins deux pions de rétention radiale du secteur d'anneau sur le pivot interne d'au moins une aube, ces pions étant parallèles et s'étendant de part et d'autre du pivot interne de l'aube en passant dans une gorge annulaire externe de ce pivot, caractérisé en ce que chaque pion comprend des moyens coopérant par liaison de formes avec des moyens conjugués de l'autre pion pour immobiliser ces pions en rotation dans les orifices des secteurs d'anneau.

Selon l'invention, les deux pions de rétention radiale d'un secteur d'anneau s'immobilisent mutuellement en rotation autour de leurs axes ce qui empêche les pions de venir frotter et de prendre appui sur la nervure de la virole qui a donc une durée de vie plus longue que dans la technique antérieure. En cas d'usure importante des moyens d'immobilisation en rotation des pions, il suffit de remplacer ces pions, et non plus la virole comme dans la technique antérieure, ce qui est simple et plus économique.

Les moyens d'immobilisation en rotation sont de préférence formés sur les têtes des pions. La tête de l'un des pions comprend par exemple au moins un doigt qui s'étend transversalement par rapport à l'axe du pion et qui est logé dans une encoche correspondante de la périphérie de la tête de l'autre pion.

Avantageusement, chaque secteur d'anneau comprend des orifices de montage de deux pions à chacune de ses extrémités circonférentielles, les deux pions montés à une extrémité circonférentielle du secteur d'anneau s'étendant de part et d'autre du pivot interne d'une aube, et les deux pions montés à l'autre extrémité circonférentielle du secteur d'anneau s'étendant de part et d'autre du pivot interne d'une autre aube.

L'invention concerne également des pions pour un étage d'aubes à calage variable tel que décrit ci-dessus, chaque pion comprenant un corps cylindrique relié à une extrémité à une tête s'étendant transversalement par rapport à l'axe du pion, la tête de l'un des pions comprenant un doigt destiné à coopérer avec une encoche de forme complémentaire formée sur la tête d'un autre pion.

L'invention concerne encore un compresseur haute-pression d'une turbomachine, caractérisé en ce qu'il comprend au moins un étage d'aubes à calage variable tel que décrit ci-dessus.

L'invention concerne enfin une turbomachine, telle qu'un turboréacteur ou un turbopropulseur d'avion, caractérisée en ce qu'elle comprend au moins un étage d'aubes à calage variable du type précité.

L'invention sera mieux comprise et d'autres caractéristiques, détails et avantages de l'invention apparaîtront à la lecture de la description suivante faite à titre d'exemple non limitatif et en référence aux dessins annexés dans lesquels :
- la figure 1 est une demi-vue schématique en coupe axiale d'un étage d'aubes à calage variable d'un compresseur haute-pression de turbomachine, selon la technique antérieure,
- la figure 2 est une vue schématique partielle en coupe axiale d'un anneau interne d'un étage d'aubes à calage variable, cet anneau étant équipé de pions selon l'invention ;
- la figure 3 est une vue schématique en perspective d'un jeu de pions selon l'invention,
- la figure 4 est une vue schématique partielle en perspective de l'anneau interne équipé des pions selon l'invention.

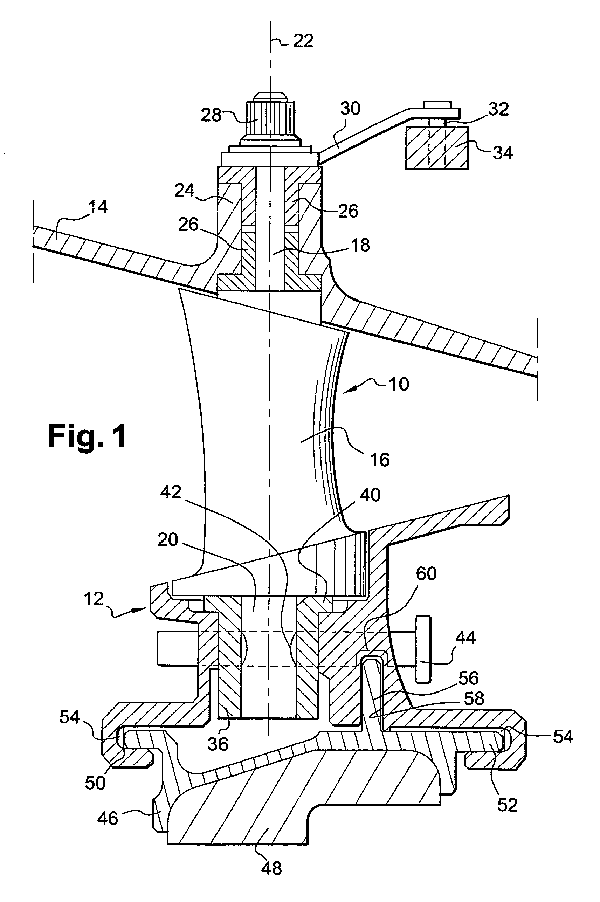

En figure 1, on a représenté un étage d'aubes 10 à calage variable d'un compresseur haute-pression de turbomachine, ces aubes 10 étant régulièrement réparties autour de l'axe de la turbomachine et s'étendant entre un anneau interne sectorisé 12 et un carter externe 14 de la turbomachine.

Chaque aube 10 comprend une pale 16 reliée à chacune de ses extrémités radialement interne et externe à un pivot cylindrique radial 18, 20 qui s'étend le long de l'axe 22 de rotation de l'aube.

Le pivot cylindrique externe 18 ou pivot de commande est engagé dans une cheminée cylindrique 24 du carter et est centré et guidé en rotation dans cette cheminée par deux bagues cylindriques 26 identiques montées tête-bêche autour du pivot externe 18.

L'extrémité radialement externe du pivot externe 18 est filetée et fixée au moyen d'un écrou 28 à une extrémité d'un levier de commande 30. L'autre extrémité du levier de commande 30 porte un doigt 32 qui est serti sur cette extrémité 10 du levier et est guidé en rotation dans un anneau de commande 34 qui s'étend autour de l'axe de la turbomachine, à l'extérieur du carter 14. Un déplacement angulaire de l'anneau de commande 34 autour de l'axe de la turbomachine se traduit par une rotation des leviers de commande 30 autour des axes 22 et par l'entraînement en rotation des aubes 10 à calage variable autour de ces axes.

Le pivot cylindrique interne 20 ou pivot de guidage est engagé dans un logement cylindrique de l'anneau interne 12 et est centré et guidé en rotation dans ce logement par une douille cylindrique 36. Cette douille 36 comprend à son extrémité radialement externe un rebord annulaire externe 40 maintenu radialement serré entre l'extrémité radialement interne de la pale 16 de l'aube et un épaulement annulaire de l'anneau 12.

Le pivot interne 20 de l'aube comprend une gorge annulaire externe 42 formée en regard de deux lumières traversantes diamétralement opposées formées sur la paroi cylindrique de la douille 36, ces lumières étant situées en avant et en arrière du plan du dessin de la figure 1 et n'étant pas donc visibles sur cette figure.

En variante, la gorge annulaire externe 42 est formée sur une bague cylindrique frettée sur le pivot interne 20 de l'aube et engagée dans la douille de guidage 36.

L'anneau interne 12 est sectorisé et chaque secteur d'anneau comporte plusieurs logements cylindriques radiaux de réception des pivots internes d'aubes. Un anneau interne 12 est par exemple composé de huit secteurs d'anneau qui comportent chacun huit ou neuf de ces logements.

Chaque secteur d'anneau est maintenu radialement sur les aubes correspondantes par au moins deux pions cylindriques 44 qui sont engagés dans des orifices axiaux du secteur d'anneau situés de part et d'autre d'un pivot d'aube 20. Ces deux pions sont également situés en avant et en arrière du plan du dessin de la figure 1. Ces pions sont parallèles et s'étendent à travers les lumières de la douille 36 et la gorge annulaire 42 du pivot 20 pour maintenir radialement le secteur d'anneau sur le pivot de l'aube. Chaque pion comporte un corps cylindrique se terminant à une extrémité par une tête plate s'étendant transversalement par rapport à l'axe longitudinal du pion.

L'anneau interne 12 porte à son extrémité radialement interne une virole annulaire 46 également sectorisée à la périphérie interne de laquelle sont fixés des blocs 48 de matière abradable destinés à coopérer avec des léchettes radiales d'un rotor (non représenté) de la turbomachine pour limiter le passage d'air axialement d'amont en aval à l'intérieur de l'anneau interne.

Les secteurs de virole 46 comprennent des rebords circonférentiels amont 50 orientés vers l'amont et des rebords circonférentiels aval 52 orientés vers l'aval qui sont engagés dans des gorges annulaires 54 correspondantes prévues aux extrémités amont et aval, respectivement, des secteurs de l'anneau interne 12.

Les secteurs de virole 46 comprennent en outre une nervure annulaire radialement externe 56 engagée dans une rainure annulaire 58 débouchant vers l'intérieur des secteurs d'anneau 12 pour assurer l'alignement des secteurs d'anneau les uns avec les autres. L'extrémité radialement externe de cette nervure 56 est également engagée dans des encoches transversales 60 des corps des pions cylindriques 44 pour maintenir axialement les pions 44 dans les orifices des secteurs d'anneau 12.

Pendant le déplacement en rotation d'une aube 10 autour de son axe 22, le pivot interne 20 de cette aube se déplace en rotation autour de cet axe dans la douille 36 et frotte sur les pions cylindriques 44. Les parois amont et aval des encoches 60 des pions 44 viennent buter sur les parois en regard de la nervure, et les extrémités latérales des fonds de ces encoches 60 viennent buter sur la périphérie externe de la nervure, ce qui se traduit pas une usure accélérée de la virole et une diminution de sa durée de vie.

L'invention permet de remédier à ces problèmes grâce à des moyens d'indexage formés sur l'un des deux pions et destinés à coopérer par liaison de formes avec des moyens conjugués formés sur l'autre pion pour assurer l'immobilisation en rotation de ces pions autour de leurs axes lors du calage angulaire de l'aube correspondante et pendant le fonctionnement de la turbomachine.

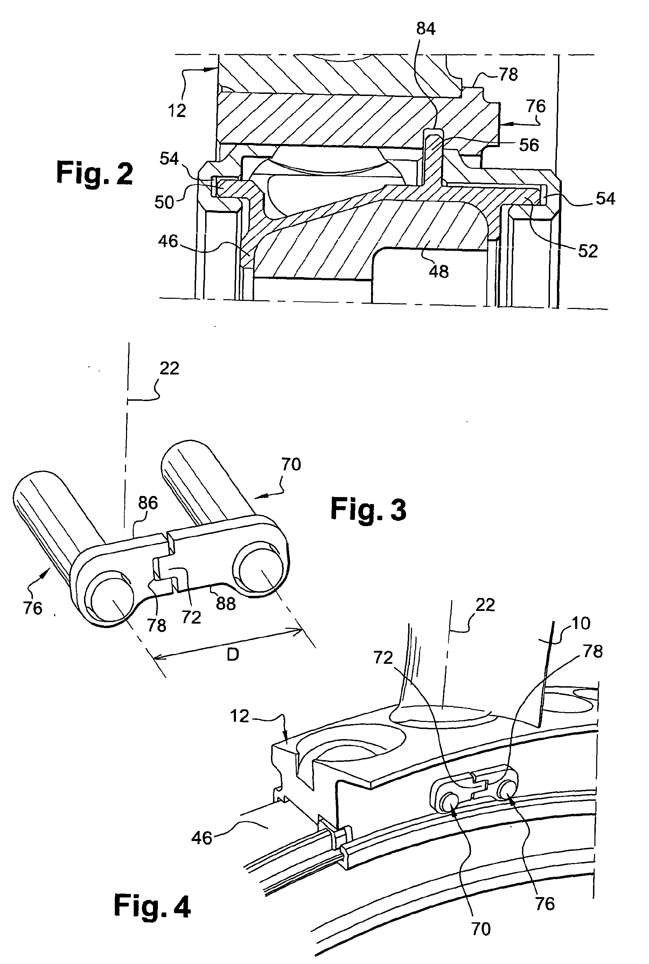

Dans l'exemple de réalisation représenté aux figures 2 à 4, les moyens d'immobilisation comprennent un doigt 72 porté par la tête d'un premier pion, et une encoche 78 formée à la périphérie de la tête du second pion 76, cette encoche ayant une forme complémentaire de celle du doigt du premier pion. Le doigt 72 et l'encoche 78 sont chacun formé par un prolongement transversal de la tête du pion. Chaque pion et ses moyens d'immobilisation sont formés d'une seule pièce.

Comme dans la technique antérieure, les deux pions 70, 76 sont montés dans des orifices d'un secteur d'anneau 12 et s'étendent parallèlement entre eux et de part et d'autre du pivot interne 20 d'une aube 10 à calage variable (figure 4).

La distance D en direction circonférentielle entre les axes des pions peut varier avec le diamètre des pions. Cette distance D est préférentiellement différente d'un étage à l'autre dans le compresseur de la turbomachine, ce qui évite de monter des pions cylindriques réservés à un étage du compresseur sur un autre étage de ce compresseur. La distance D peut également être identique dans tous les étages du compresseur de manière à n'avoir qu'une seule référence de jeu de pions cylindriques, et à simplifier l'approvisionnement de ces pions. A titre d'exemple, la distance D entre les axes des pions est comprise entre 5 et 10mm environ, les diamètres des pions variant par exemple de 5 à 7mm environ.

Les pions 70, 76 qui sont immobilisés en rotation autour de leurs axes sont bloqués axialement par la nervure annulaire 56 de la virole 46 qui passe dans les encoches transversales 84 formées sur les corps des pions. Le jeu axial entre la nervure 56 et les encoches 84 des pions peut être optimisé pour limiter les déplacements axiaux des pions dans les orifices des secteurs d'anneau 12.

Par ailleurs, la position angulaire des moyens d'immobilisation 72, 78 sur les têtes des pions est déterminée de sorte que, en position de montage, les encoches 84 des pions soient alignées en direction circonférentielle l'une avec l'autre.

Les têtes des pions 70, 76 peuvent en outre comprendre des moyens d'indication de la position angulaire des encoches 84 sur les corps des pions pour éviter un mauvais montage des pions dans les orifices des secteurs d'anneau. Dans l'exemple représenté, les têtes des pions comprennent chacun un bord latéral droit 86 et un bord latéral 88 présentant une portion incurvée concave indiquant que l'encoche 84 est située directement en arrière de ce bord 86 et que, en position de montage, ce bord 88 est destiné à être orienté vers l'intérieur de façon à ce que l'encoche 84 débouche vers l'intérieur.

Chaque secteur d'anneau comprend préférentiellement des orifices de montage de deux pions à chacune de ses extrémités circonférentielles. Les pions montés à une extrémité circonférentielle du secteur d'anneau coopèrent avec le pivot interne d'une aube, et les pions montés à l'autre extrémité circonférentielle du secteur d'anneau coopèrent avec le pivot interne d'une autre aube pour maintenir radialement ce secteur d'anneau sur ces aubes.

Chaque secteur de l'anneau interne est monté de la manière suivante : le secteur d'anneau est déplacé radialement depuis l'intérieur vers l'extérieur jusqu'à ce que les pivots internes 20 des aubes de ce secteur soient engagés dans la douille 36 et dans les logements cylindriques du secteur d'anneau. Un jeu de deux pions est monté à chaque extrémité circonférentielle du secteur d'anneau, chaque pion étant engagé axialement depuis l'aval dans un orifice du secteur d'anneau en passant à travers les lumières de la douille 36 et la gorge 42 du pivot interne 20, jusqu'à ce que la tête du pion vienne en appui axial contre le secteur d'anneau. Pour chaque jeu de pions, le doigt 72 du premier pion 70 est emboîté dans l'encoche 78 du second pion 76 de sorte que les encoches 84 des pions soient alignées l'une avec l'autre et débouchent radialement vers l'intérieur. Un secteur de virole 46 est alors monté à la périphérie interne du secteur d'anneau 12 en engageant les rebords circonférentiels 50, 52 du secteur de virole dans les gorges annulaires 54 du secteur d'anneau et en faisant glisser en direction circonférentielle le secteur d'anneau et le secteur de virole l'un sur l'autre, jusqu'à ce que la nervure 56 du secteur de virole soit engagée dans les encoches 84 des pions 70, 76. Les secteurs de virole et de l'anneau peuvent avoir des dimensions identiques ou différentes en direction circonférentielle.

Bien entendu, l'invention n'est pas limitée au mode de réalisation qui a été décrit dans ce qui précède et représenté dans les dessins annexés. Il serait par exemple possible de donner d'autres formes aux moyens d'immobilisation 72, 78 des pions. Il serait également possible de former le pion et ses moyens d'immobilisation en deux pièces indépendantes et de rapporter et fixer ces moyens d'immobilisation sur le pion.

## Revendications

1. Pions pour un étage d'aubes à calage variable de turbomachine, chaque pion comprenant un corps cylindrique relié à une extrémité à une tête s'étendant transversalement par rapport à l'axe du pion, le corps de chaque pion comportant une encoche transversale, **caractérisé en ce que** la tête de l'un des pions (70) comprend un doigt (72) destiné à coopérer avec une encoche (78) de forme complémentaire formée sur la tête d'un autre pion (76), et **en ce que** les têtes des pions comportent en outre des moyens d'indication de la position angulaire des encoches sur les corps des pions.

2. Etage d'aubes à calage variable pour une turbomachine, comprenant des pions selon la revendication 1, ces aubes (10) comportant des pivots radialement externes (18) engagés dans des cheminées radiales (24) d'un carter externe (14) et des pivots radialement internes (20) engagés dans des logements correspondants d'un anneau interne sectorisé (12), chaque secteur d'anneau comportant des orifices axiaux de montage d'au moins deux pions (70, 76) selon la revendication 1 de rétention radiale du secteur d'anneau sur le pivot interne (20) d'une aube, ces pions étant parallèles et s'étendant de part et d'autre du pivot interne de l'aube en passant dans une gorge annulaire externe (42) de ce pivot, l'anneau portant à sa périphérie interne une virole annulaire (46) sectorisée comportant des blocs de matière abradable et une nervure annulaire (56) radialement externe engagée dans les encoches transversales (84) des corps des pions pour maintenir axialement les pions dans les orifices des secteurs d'anneau, le doigt de la tête de l'un des pions (70) coopérant avec l'encoche de la tête de l'autre pion (76) pour immobiliser ces pions en rotation dans les orifices des secteurs d'anneau, les moyens d'indication de la position angulaire des encoches sur les corps des pions permettant d'éviter un mauvais montage des pions dans les orifices des secteurs d'anneau.

3. Etage d'aubes à calage variable selon la revendication 2, **caractérisé en ce que** la tête de chaque pion comprend un bord latéral droit (86) et un bord latéral (88) présentant une portion incurvée concave indiquant que l'encoche (84) du corps du pion est située directement en arrière de ce bord.

4. Etage d'aubes à calage variable selon la revendication 2 ou 3, **caractérisé en ce que** le doigt (72) s'étend transversalement par rapport à l'axe du pion (70) et l'encoche (78) est formée à la périphérie de la tête de l'autre pion (76).

5. Etage d'aubes à calage variable selon l'une des revendications 2 à 4, **caractérisé en ce que** chaque secteur d'anneau comprend des orifices de montage de deux pions (70, 76) à chacune de ses extrémités circonférentielles, les pions montés à une extrémité circonférentielle du secteur d'anneau s'étendant de part et d'autre du pivot interne (20) d'une aube (10), et les pions montés à l'autre extrémité circonférentielle du secteur d'anneau s'étendant de part et d'autre du pivot interne d'une autre aube.

6. Compresseur haute-pression d'une turbomachine, **caractérisé en ce qu'**il comprend au moins un étage d'aubes à calage variable selon l'une des revendications 2 à 5.

7. Turbomachine, telle qu'un turboréacteur ou un turbopropulseur d'avion, **caractérisée en ce qu'**elle comprend au moins un étage d'aubes à calage variable selon l'une des revendications 2 à 5.

## Claims

1. Pins for a stage of variable-pitch turbomachine vanes, each pin comprising a cylindrical body connected at one end to a head extending transversely relative the axis of the pin, the body of each pin including a transverse notch, the pins being **characterized in that** the head of one of the pins (70) includes a finger (72) for co-operating with a notch (78) of complementary shape formed in the head of the other pin (76), and **in that** the heads of the pins also include means for indicating the angular positions of the notches in the bodies of the pins.

2. A stage of variable-pitch vanes for a turbomachine, including pins according to claim 1, the vanes (10) having radially outer pivots (18) engaged in radial ducts (24) in an outer casing (14) and radially inner pivots (20) engaged in corresponding housings in a sectorized inner ring (12), each sector of the ring having axial orifices for mounting at least two pins (70, 76) according to claim 1 for radially retaining the ring sector on the inner pivot (20) of a vane, the pins being parallel and extending on either side of the inner pivot of the vane, passing in an outer annular groove (42) of the pivot, the ring carrying on its inner periphery a sectorized annular shroud (46) including blocks of abradable material and a radially outer annular rib (56) engaged in the transverse notches (84) of the bodies of the pins in order to hold the pins axially in the orifices in the ring sectors, the finger of the head of one of the pins (70) co-operating with the notch in the head of the other pin (76) to prevent the pins from turning in the orifices of the ring sectors, the means for indicating the angular positions of the notches in the bodies of the pins serving to avoid the pins being wrongly mounted in the orifices of the ring sectors.

3. A stage of variable-pitch vanes according to claim 2, **characterized in that** the head of each pin includes a side edge (86) that is straight and a side edge (88) that presents a concave curved portion indicating that the notch (84) of the body of the pin is situated directly behind said edge.

4. A stage of variable-pitch vanes according to claim 2 or claim 3, **characterized in that** the finger (72) extends transversely relative to the axis of the pin (70) and the notch (78) is formed in the periphery of the head of the other pin (76).

5. A stage of variable-pitch vanes according to any one of claims 2 to 4, **characterized in that** each ring sector includes orifices for mounting two pins (70, 76) at each of its circumferential ends, the pins mounted at one circumferential end of the ring sector extending on either side of the inner pivot (20) of a vane (10), and the pins mounted at the other circumferential end of the ring sector extending on either side of the inner pivot of another vane.

6. A high-pressure turbomachine compressor, **characterized in that** it includes at least one stage of variable-pitch vanes according to any one of claims 2 to 5.

7. A turbomachine, such as an airplane turbojet or turboprop, **characterized in that** it includes at least one stage of variable-pitch vanes according to any one of claims 2 to 5.

## Patentansprüche

1. Stifte für eine verstellbare Turbomaschinenschaufelstufe, wobei jeder Stift einen zylindrischen Körper aufweist, der an einem Ende mit einem Kopf verbunden ist, welcher sich quer zur Achse des Stifts erstreckt, wobei der Körper jedes Stifts eine Querkerbe aufweist, **dadurch gekennzeichnet, dass** der Kopf eines der Stifte (70) einen Finger (72) aufweist, der dazu bestimmt ist, mit einer Kerbe (78) mit komplementärer Form zusammenzuwirken, die am Kopf eines anderen Stifts (76) ausgebildet ist, und dass die Köpfe der Stifte ferner Mittel zur Anzeige der Winkelposition der Kerben an den Körpern der Stifte aufweisen.

2. Verstellbare Schaufelstufe für eine Turbomaschine, die Stifte nach Anspruch 1 aufweist, wobei diese Schaufeln (10) radial äußere Zapfen (18), die in radialen Stutzen (24) eines Außengehäuses (14) in Eingriff stehen, und radial innere Zapfen (20) aufweisen, die in entsprechenden Aufnahmen eines sektorierten inneren Rings (12) in Eingriff stehen, wobei jeder Ringsektor axiale Öffnungen zur Montage von wenigstens zwei Stiften (70, 76) nach Anspruch 1 zum radialen Halt des Ringsektors an dem inneren Zapfen (20) einer Schaufel aufweist, wobei diese Stifte parallel sind und sich beiderseits des inneren Zapfens erstrecken, wobei sie in einer äußeren ringförmigen Kehle (42) dieses Zapfens verlaufen, wobei der Ring an seinem Innenumfang eine sektorisierte ringförmige Zwinge (46) mit Blöcken aus abtragbarem Material und eine radial äußere ringförmige Rippe (56) trägt, die in den Querkerben (84) der Körper der Stifte in Eingriff steht, um die Stifte in den Öffnungen der Ringsektoren zu halten, wobei der Finger des Kopfes eines der Stifte (70) mit der Kerbe des Kopfs des anderen Stifts (76) zusammenwirkt, um diese Stifte in den Öffnungen der Ringsektoren drehfest zu fixieren, wobei die Mittel zur Anzeige der Winkelposition der Kerben an den Körpern der Stifte ermöglichen, eine mangelhafte Montage der Stifte in den Öffnungen der Ringsektoren zu verhindern.

3. Verstellbare Schaufelstufe nach Anspruch 2, **dadurch gekennzeichnet, dass** der Kopf jedes Stifts einen seitlichen, geraden Rand (86) und einen seitlichen Rand (88) aufweist, der einen konkav gekrümmten Abschnitt aufweist, welcher angibt, dass die Kerbe (84) des Körpers des Stifts direkt hinter diesem Rand liegt.

4. Verstellbare Schaufelstufe nach Anspruch 2 oder 3, **dadurch gekennzeichnet, dass** sich der Finger (72) quer zu der Achse des Stifts (70) erstreckt und die Kerbe (78) am Umfang des Kopfs des anderen Stifts (76) ausgebildet ist.

5. Verstellbare Schaufelstufe nach einem der Ansprüche 2 bis 4, **dadurch gekennzeichnet, dass** jeder Ringsektor Öffnungen zur Montage von zwei Stiften (70, 76) an jedem seiner Umfangsenden aufweist, wobei sich die an einem Umfangsende des Ringsektors montierten Zapfen beiderseits des inneren Zapfens (20) einer Schaufel (10) erstrecken und sich die an dem anderen Umfangsende des Ringsektors montierten Zapfen beiderseits des inneren Zapfens einer anderen Schaufel erstrecken.

6. Hochdruckverdichter einer Turbomaschine, **dadurch gekennzeichnet, dass** er wenigstens eine verstellbare Schaufelstufe nach einem der Ansprüche 2 bis 5 aufweist.

7. Turbomaschine wie ein Flugzeugstrahltriebwerk oder Flugzeugturboproptriebwerk, **dadurch gekennzeichnet, dass** sie wenigstens eine verstellbare Schaufelstufe nach einem der Ansprüche 2 bis 5 aufweist.
